# EUROPÄISCHE PATENTANMELDUNG

(11) **EP 3 825 178 A1**
(43) Veröffentlichungstag der Anmeldung: **26.05.2021**
(21) Anmeldenummer: 20209371.2
(22) Anmeldetag: 24.11.2020
(51) Int. Cl.: B60P 1/38

(54) **LADEMULDE FÜR LASTKRAFTWAGEN, AUFLIEGER UND/ODER ANHÄNGER SOWIE LASTKRAFTWAGEN, AUFLIEGER UND/ODER ANHÄNGER MIT EINER DERARTIGEN LADEMULDE**

(30) Priorität: 25.11.2019 DE 102019131816
(71) Anmelder: Buhs, Hubert, 56459 Willmenrod (DE)
(72) Erfinder: Buhs, Hubert, 56459 Willmenrod (DE)
(74) Vertreter: advotec.

(57) **Zusammenfassung**

Lademulde (2) für Lastkraftwagen, Auflieger und/oder Anhänger zum Transport von Schüttgut, wie z. B. Asphalt, Erde, Steine, Schotter, Kies, Sand, Schutt o. dgl., wobei die Lademulde (2) im Wesentlichen aus einem Boden, zwei seitlichen Ladebordwänden, einer vorderen Ladebordwand und einer am hinteren Ende der Lademulde (2) schwenkbar gelagerten Rückwandklappe gebildet ist, wobei der Boden einen sich mindestens über die Länge und Breite der Lademulde (2) erstreckenden Fördergurt (11) aufweist, der zwischen zwei Umlenkelementen (9, 10) eingespannt ist und dessen zu dem Schüttgut gerichtetes obere Trum (12) sich auf dem Boden abstützt, wobei das vorzugsweise im Bereich des vorderen Endes der Lademulde (2) bzw. der vorderen Ladebordwand angeordnete Umlenkelement (9) als sich mindestens über die Breite des Fördergurtes (11) erstreckende Umlenkwalze (14) und das vorzugsweise im Bereich des hinteren Ende der Lademulde (2) bzw. der Rückwandklappe angeordnete Umlenkelement (10) als sich mindestens über die Breite des Fördergurtes (11) erstreckende Antriebswalze (15) ausgebildet ist, wobei die Antriebswalze (15) formschlüssig an dem Fördergurt (11) angreift.

## Beschreibung

Die Erfindung betrifft eine Lademulde für Lastkraftwagen, Auflieger und/oder Anhänger zum Transport von Schüttgut, wie z. B. Asphalt, Erde, Steine, Schotter, Kies, Sand, Schutt o. dgl., wobei die Lademulde im Wesentlichen aus einem Boden, zwei seitlichen Ladebordwänden, einer vorderen Ladebordwand und einer am hinteren Ende der Lademulde schwenkbar gelagerten Rückwandklappe gebildet ist. Des Weiteren betrifft die Erfindung einen Lastkraftwagen, Auflieger und/oder Anhänger mit einer derartigen Lademulde.

Derartige Lademulden, die beispielsweise bei Muldenkippern Verwendung finden und dort auch als Kippmulden bezeichnet werden, sind hinlänglich bekannt. Bei Muldenkippern u. dgl. treten sehr oft beim Abkippen der Ladung die unterschiedlichsten Probleme auf. So kommt es z. B. sehr oft vor, dass bei einem unsicheren Stand der Fahrzeuge aufgrund von losem und/oder unebenem Untergrund sowie Materialanhaftungen innerhalb des Laderaumes bzw. der Kippmulde beim Kippen derselben die Fahrzeuge umkippen, da beim Kippen ein sich stetig verändernder Schwerpunkt auftritt. D. h., der Schwerpunkt wandert nach oben und gleichzeitig nach hinten. Beim Umkippen der Fahrzeuge entstehen regelmäßig große Schäden an demselben bis hin zu Totalschäden, wodurch hohe Kosten für die Wiederinstandsetzung bzw. Neuanschaffung entstehen.

Gleiches gilt bei einem Einsatz der Fahrzeuge im schweren Erdbau, bei dem sich sehr oft insbesondere die beladenen Fahrzeuge in unbefestigtem Gelände festfahren. Zur Verringerung des Gewichtes der Fahrzeuge wird dann versucht, die Ladung abzukippen, wobei es aber immer wieder zu einem Umkippen der Fahrzeuge durch Materialanhaftungen innerhalb des jeweiligen Laderaumes bzw. der Kippmulde kommt. Wird ein Zugfahrzeug mit Sattelauflieger und Kippmulde verwendet, kippt der Sattelauflieger um und reißt das Zugfahrzeug mit sich. Auch hierbei entstehen große Schäden bis hin zu Totalschäden, die hohe Kosten verursachen.

Sehr oft kommt es auch vor, dass innerhalb geschlossener Räume, beispielsweise in älteren Bauwerken, Hallen usw., Ladungen abgekippt werden müssen. Gewöhnlich ist es erforderlich, dass das Fahrzeug zur kompletten Entleerung der Kippmulde ein Stück nach vorne mit vollständig gekippter Kippmulde verfahren wird. Da die vorerwähnten Bauwerke, Hallen usw. in der Regel jedoch sehr niedrig sind, ist ein Vorfahren des Fahrzeugs mit gekippter Kippmulde oft nicht möglich. Wird ein Herablassen der Kippmulde vor dem Vorfahren des Fahrzeugs vergessen oder wird versucht, trotz der geringen Höhe der Bauwerke, Hallen usw. mit gekippter Kippmulde vorzufahren, wird sehr oft das Dach des jeweiligen Bauwerks, der jeweiligen Halle usw. heruntergerissen. Dabei entstehen neben der Beschädigung des Daches auch erhebliche Schäden an dem Fahrzeug.

Sehr oft kommt es aber auch vor, dass generell ein Herablassen der Kippmulde vergessen wird. Im Bereich von Brückenbauwerken kann es dann zu einer Beschädigung derselben kommen. Im schlimmsten Fall muss die Brücke abgerissen und neu gebaut werden, wobei auch das Fahrzeug schwer beschädigt ist oder aber auch einen Totalschaden aufweist. Die entstehenden Kosten sind in diesen Fall extrem hoch.

Auch bei über Land geführten Stromleitungen kann es im Falle eines Nichtherablassens der Kippmulde zu schweren Schäden kommen, wobei im schlimmsten Fallen das Fahrzeug abbrennen kann und Hochspannungsleitungen neu verlegt werden müssen.

Der Erfindung liegt die Aufgabe zugrunde, eine Lademulde der angegebenen Gattung bzw. einen Lastkraftwagen, Auflieger und/oder Anhänger mit einer Lademulde sowie ein Verfahren zur Entleerung einer Lademulde zu schaffen, die bzw. der bzw. mit dem sehr einfach und schnell ohne ein Kippen der Lademulde entladen werden kann und dabei Beschädigungen an den jeweiligen Fahrzeugen, Aufliegern und/oder Anhängern durch ein Umkippen oder ein Hängenbleiben derselben sowie Beschädigungen an Bauwerken Brücken, Stromleitungen usw. durch hängengebliebene Fahrzeuge, Auflieger und/oder Anhänger weitestgehend ausgeschlossen sind.

Diese Aufgabe wird erfindungsgemäß zum einen durch eine Lademulde mit den Kennzeichnungsmerkmalen des Patentanspruchs 1 und zum anderen durch einen Lastkraftwagen, Auflieger und/oder Anhänger mit den Kennzeichnungsmerkmalen des Patentanspruchs 15 gelöst.

Zweckmäßige Weiterbildungen der Erfindung sind in den Unteransprüchen gekennzeichnet.

Bei der erfindungsgemäßen Lademulde weist der Boden einen sich mindestens über die Länge und Breite der Lademulde erstreckenden Fördergurt auf, der zwischen zwei Umlenkelementen eingespannt ist und dessen zu dem Schüttgut gerichtetes oberes Trum sich auf dem Boden abstützt. Dabei ist das vorzugsweise im Bereich des vorderen Endes der Lademulde bzw. der vorderen Ladebordwand angeordnete Umlenkelement als sich mindestens über die Breite des Fördergurtes erstreckende Umlenkwalze und das vorzugsweise im Bereich des hinteren Endes der Lademulde bzw. der Rückwandklappe angeordnete Umlenkelement als sich mindestens über die Breite des Fördergurtes erstreckende Antriebswalze ausgebildet. Die Antriebswalze greift dabei formschlüssig an dem Fördergurt an. Der Fördergurt in Verbindung mit der Antriebswalze ermöglicht ein einfaches Entladen des Schüttguts aus der Lademulde, ohne dass ein Abkippen erforderlich ist, wobei der Fördergurt das Schüttgut nach dem Öffnen der Rückwandklappe über die Antriebswalze in Richtung des hinteren Endes der Lademulde fördert und das Schüttgut am hinteren Ende der Lademulde aus derselben herausfällt. Durch die besondere Ausbildung ist eine Entleerung der Lademulde bei fast allen Gegebenheiten gewährleistet und auch ein direktes Verteilen des Schüttguts auf einer vorgesehenen Fläche möglich. Dadurch, dass der Schwerpunkt nicht mehr nach oben und gleichzeitig nach hinten wandert, ist ein Umkippen des mit der erfindungsgemäßen Lademulde ausgestatteten Lastkraftwagens, Aufliegers und/oder Anhängers nahezu ausgeschlossen. Selbst bei einem unsicheren Stand der Fahrzeuge aufgrund von losem und/oder unebenem Untergrund bzw. auf unbefestigtem Gelände ist die Wahrscheinlichkeit eines Umkippens kaum gegeben.

Um auch sehr hohe Lasten entladen zu können, kann die Umlenkwalze alternativ ebenfalls als Antriebswalze ausgebildet sein.

Die Antriebswalze kann über eine Zugeinrichtung mit dem Fördergurt verbunden sein. Über die Zugeinrichtung wird die Kraft der Antriebswalze auf den Fördergurt übertragen.

Die Zugeinrichtung kann aus einer Mehrzahl von in Längsrichtung der Lademulde verlaufenden gleichmäßig über die Breite der Lademulde verteilten Zugeinheiten gebildet sein. Die gleichmäßige Verteilung der Mehrzahl von Zugeinheiten sorgt für eine gleichmäßige Kraftverteilung auf die gesamte Breite des Fördergurtes und einen geraden Lauf des Fördergurtes. Der Fördergurt bildet in Verbindung mit den Zugeinheiten ein in sich geschlossenes System, das endlos umlaufen kann. Eine Startposition des Fördergurtes muss daher nicht eingenommen werden bzw. entfällt, so dass eine Beladung der Lademulde stets gewährleistet ist.

Vorzugsweise kann jede Zugeinheit aus einer am Innenumfang des Fördergurtes anliegenden Kette gebildet sein, die einerseits mit dem Fördergurt vorzugsweise lösbar verbindbar und andererseits mit einem Zahnrad der Antriebswalze formschlüssig verbunden sein kann. Alternativ dazu kann jede Zugeinheit aus einem am Innenumfang des Fördergurtes anliegenden Zahnriemen gebildet sein, der einerseits mit dem Fördergurt vorzugsweise lösbar verbindbar und andererseits mit einer gezahnten Riemenscheibe der Antriebswalze formschlüssig verbunden sein kann. Durch die lösbare Verbindung zwischen Fördergurt und Zugeinheiten ist gewährleistet, dass für Reparaturen diese Verbindung sehr einfach gelöst werden kann, wobei u.a. auch der Fördergurt nach Bedarf (natürlicher Verschleiß) sehr einfach ausgetauscht werden kann.

Jede Kette bzw. jeder Zahnriemen kann mittels einer Vielzahl von Schrauben oder mittels einer Vielzahl von Nieten oder mittels eines Klebstoffes mit dem Fördergurt verbunden sein. Über die Ketten bzw. die Zahnriemen der Zugeinheiten wird die Kraft der Antriebswalze über die Befestigungspunkte auf den Fördergurt übertragen, so dass die Belastung auf den Fördergurt relativ gering gehalten wird.

Die Umlenkwalze kann entsprechend der Antriebswalze Zahnräder für die Ketten bzw. gezahnte Riemenscheiben für die Zahnriemen aufweisen.

Zur Führung des Fördergurtes in Längsrichtung der Lademulde können die Ketten bzw. die Zahnriemen jeweils in eine Längsnut im Boden hineinragen, wobei zwischen den in die Längsnut ragenden Rändern der Ketten bzw. der Zahnriemen und den Rändern der Längsnut ein Luftspalt gebildet sein kann. Die Längsnuten verhindern durch die Zwangsführung ein seitliches Wandern des Fördergurtes und somit ein Anschlagen der von den seitlichen Ladebordwänden beabstandeten seitlichen Ränder des Fördergurtes an denselben.

Zur Verminderung des Reibwertes zwischen dem Boden und dem oberen Trum bzw. der Innenseite des Fördergurtes können zwischen den Längsnuten bzw. zwischen den Längsnuten und den seitlichen Ladebordwänden Platten auf dem Boden befestigt sein. Die Platten können entweder eine Beschichtung aus einem Material mit guten Gleiteigenschaften aufweisen oder vorzugsweise aus einem Material mit guten Gleiteigenschaften bestehen. Durch die Verwendung des vorgenannten Materials ist der Boden zum einen hoch belastbar und zum anderen wird der Reibwert extrem minimiert, so dass beim Entladen bzw. Anlaufen des Fördergurtes die Haftreibung sehr leicht überwunden werden kann.

Des Weiteren können die Platten eine Vielzahl von Durchgangsbohrungen aufweisen, die mit Druckluft beaufschlagbar sein können. Die Druckluft sorgt für ein Luftkissen zwischen dem Fördergurt sowie den Platten und somit für eine Unterstützung zur Überwindung der Haft- bzw. Gleitreibung von unten, wobei zudem mit der Druckluft ein Trennmittel, wie beispielsweise ein dünnflüssiges Öl, Polytetrafluorethylen, ein Trockenschmierstoff, wie z. B. Graphitpulver, oder sonstiges eingebracht werden kann, wodurch der Reibwert weiter minimiert wird.

Um eine gleichmäßige Spannung jeder Zugeinheit bzw. jeder Kette bzw. jedes Zahnriemens zu gewährleisten und auch für den Geradeauslauf des Fördergurtes zu sorgen, kann der Umlenkwalze und/oder jeder Zugeinheit eine Spannvorrichtung zugeordnet sein.

Unterhalb des unteren Trums des Fördergurtes kann eine Abstützung für dasselbe vorgesehen sein. Die Abstützung sorgt dafür, dass das untere Trum des Fördergurtes nicht nach unten durchhängt und kann gleichzeitig einen Schutz von unten bieten.

Die Antriebswalze kann entweder hydraulisch oder elektrisch angetrieben sein.

Damit keinerlei Schüttgut in den jeweiligen Spalt zwischen den seitlichen Rändern des Fördergurts und der seitlichen Ladebordwand bzw. in den Durchlass zwischen dem oberem Trum des Fördergurtes und der vorderen Ladebordwand gelangen kann, können an den beiden seitlichen Ladebordwänden und/oder der vorderen Ladebordwand sich über die Länge derselben erstreckende, verkröpft ausgebildete Ableitbleche befestigt sein, an deren zu dem Fördergurt gerichteten Ende ein Dichtelement angeordnet sein kann, das sich auf dem Fördergurt abstützt und den Laderaum abdichtet.

Die seitlichen Ladebordwände können von der vorderen Ladebordwand bis zum hinteren Ende der Lademulde konisch auseinanderlaufen. Diese Ausbildung sorgt dafür, dass die Reibung an den seitlichen Ladebordwänden nach dem Anlaufen des Fördergurtes bei der Entleerung der Lademulde immer geringer wird.

Für eine weitere Reduzierung der Reibung können mindestens die seitlichen Ladebordwände und/oder die Ableitbleche ebenfalls eine Beschichtung aus einem Material mit guten Gleiteigenschaften aufweisen.

Um den Fördergurt insbesondere bei anhaftendem Schüttgut sauber zu halten, kann ein am hinteren Ende des Lastkraftwagens oder des Aufliegers oder des Anhängers oder der Lademulde angeordneter Abstreifer für das Schüttgut beim Entladen vorgesehen sein.

Der erfindungsgemäße Lastkraftwagen, Auflieger und/oder Anhänger ist mit einer Lademulde nach Patentanspruch 1 ausgestattet. Vorteilhafte Ausführungsformen des Lastkraftwagen, Auflieger und/oder Anhängers ergeben sich aus den auf den Anspruch 1 rückbezogenen Unteransprüchen.

Bei dem erfindungsgemäßen Verfahren wird das sich in der Lademulde befindliche Schüttgut über einen sich auf dem Boden der Lademulde abstützenden und sich vom vorderen Ende der Lademulde zu der am hinteren Ende der Lademulde schwenkbar gelagerten Rückwandklappe erstreckenden und umlaufenden Fördergurt horizontal vom vorderen Ende der Lademulde zum hinteren Ende der Lademulde gefördert, wobei das Schüttgut über das hintere Ende der Lademulde bzw. die hintere Öffnung bei geöffneter Rückwandklappe aus der Lademulde abgeworfen wird. Die Entladung des Schüttguts ist durch eine stufenlose Einstellung der Fördergurtgeschwindigkeit sehr genau dosierbar.

Nachfolgend wird anhand der schematischen Zeichnungen eine bevorzugte Ausführungsform der erfindungsgemäßen Lademulde, des Lastkraftwagens, Aufliegers und/oder Anhängers sowie des Verfahrens näher erläutert.

Es zeigen
- **Fig. 1**: eine Seitenansicht einer beispielsweise auf einem Auflieger angeordneten Lademulde,
- **Fig. 2**: in perspektivischer Darstellung einen dem Boden zugeordneten Fördergurt mit Antriebswalze und Umlenkwalze sowie Zugeinheiten, wobei der Boden aus Übersichtsgründen nicht dargestellt ist,
- **Fig. 3**: eine perspektivische Teilansicht von hinten in die Lademulde bei geöffneter Rückwandklappe, wobei der Fördergurt, die Ketten bzw. Zahnriemen sowie die Ableitbleche an den seitlichen Ladebordwänden ebenfalls aus Übersichtsgründen nicht dargestellt sind,
- **Fig. 4**: einen Schnitt nach der Linie IV-IV in **Fig. 3** und
- **Fig. 5**: einen vergrößerten Ausschnitt V aus **Fig. 1****.**

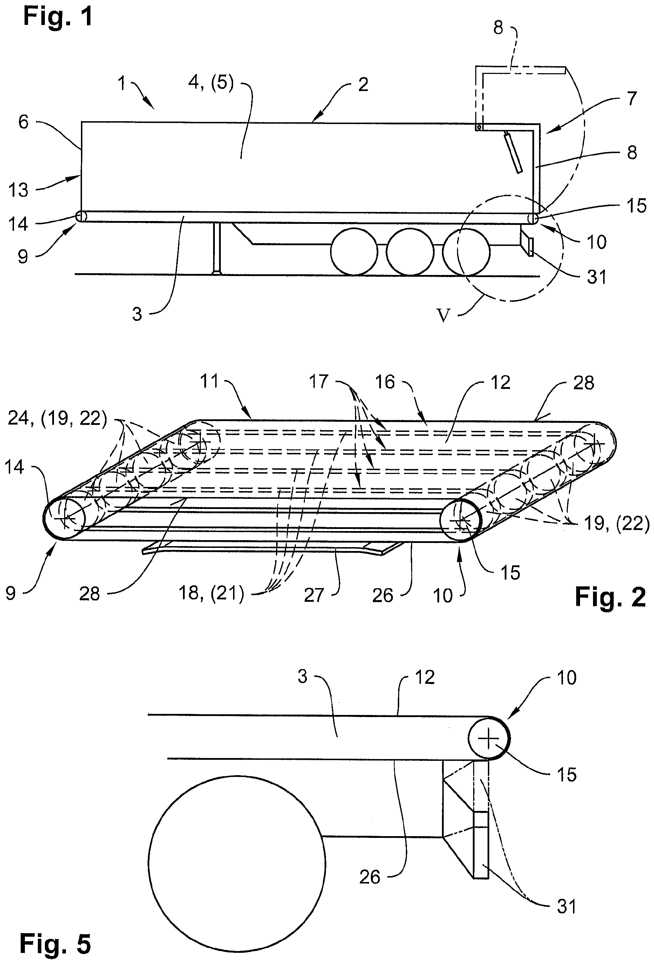

Die in **Fig. 1** dargestellte und nachfolgend am Beispiel eines Aufliegers 1 beschriebene Lademulde 2 ist u. a. auch für Lastkraftwagen oder Anhänger vorgesehen und dient dem Transport von Schüttgut, wie beispielsweise Asphalt, Erde, Steine, Schotter, Kies, Sand, Schutt o. dgl.. Die Lademulde 2 besteht im Wesentlichen aus einem das Schüttgut tragenden Boden 3 sowie zwei seitlichen Ladebordwänden 4, 5, einer vorderen Ladebordwand 6 und einer am hinteren Ende 7 der Lademulde 2 schwenkbar gelagerten Rückwandklappe 8, die sämtlich das Schüttgut innerhalb der Lademulde 2 seitlich begrenzen.

Zum Entleeren der Lademulde 2 weist der Boden 3 einen sich zwischen zwei Umlenkelementen 9, 10 eingespannten Fördergurt 11 auf (siehe **Fig. 2**), der sich mindestens über die Länge und Breite der Lademulde 2 erstreckt und mit seinem oberen Trum 12 zu dem Schüttgut gerichtet ist. Die Umlenkelemente 9, 10 sind dabei einerseits im Bereich des vorderen Endes 13 der Lademulde 2 bzw. der vorderen Ladebordwand 6 und andererseits im Bereich des hinteren Endes 7 der Lademulde 2 bzw. der Rückwandklappe 8 angeordnet, wobei vorzugsweise das im Bereich des vorderen Endes 13 der Lademulde 2 bzw. der vorderen Ladebordwand 6 angeordnete Umlenkelement 9 als Umlenkwalze 14 und das im Bereich des hinteren Endes 7 der Lademulde 2 bzw. der Rückwandklappe 8 angeordnete Umlenkelement 10 als Antriebswalze 15 ausgebildet ist, die vorzugsweise hydraulisch oder auch elektrisch angetrieben werden kann.

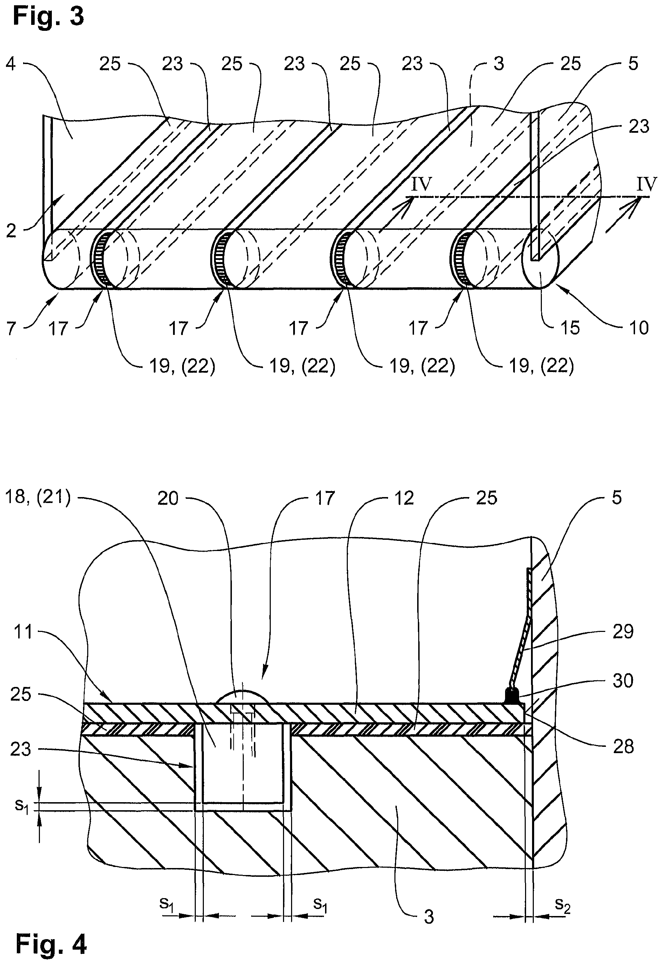

Damit die Antriebswalze 15 formschlüssig an dem Fördergurt 11 angreifen kann, ist dieselbe über eine Zugeinrichtung 16 mit dem Fördergurt verbunden. Die Zugeinrichtung 16 besteht aus einer Mehrzahl von in Längsrichtung der Lademulde 2 verlaufenden, gleichmäßig über die Breite der Lademulde 2 verteilten Zugeinheiten 17. In **Fig. 2** und **3** sind beispielhaft vier Zugeinheiten 17 dargestellt. Es versteht sich aber von selbst, dass je nach Anforderungen auch mehr oder weniger Zugeinheiten 17 vorgesehen sein können. Ferner versteht sich von selbst, das die Umlenkwalze 14 alternativ ebenfalls als Antriebswalze 15 ausgebildet sein kann, wodurch die Entleerung sehr hoher Lasten gewährleistet ist.

Vorzugsweise weist jede Zugeinheit 17 eine am Innenumfang des Fördergurtes 11 anliegende Kette 18 auf, die einerseits mit dem Fördergurt 11 und andererseits mit einem Zahnrad 19 der Antriebswalze 15 formschlüssig verbunden ist. Die Verbindung von Kette 18 zu Fördergurt 11 erfolgt vorzugsweise mittels einer Vielzahl von über die gesamte Länge der Kette 18 gleichmäßig verteilten Schrauben 20 (siehe **Fig. 4**). Die Verwendung von Schrauben 20 ermöglicht ein im Wesentlichen problemloses Entfernen derselben bei einem Reparaturfall o. dgl.. Alternativ kann die Verbindung der Kette 18 zum Fördergurt 11 mittels einer Vielzahl von Nieten oder aber auch mittels eines Klebstoffes bzw. mittels einer Vielzahl von Klebepunkten erfolgen, wodurch sich jedoch im Reparaturfall das Entfernen derselben bzw. desselben schwieriger gestaltet.

Alternativ zu der Kette 18 kann aber auch jede Zugeinheit 17 einen Zahnriemen 21 aufweisen, der ebenfalls einerseits mit dem Fördergurt 11 und andererseits anstelle des Zahnrades 19 mit einer Riemenscheibe 22 der Antriebswalze 15 formschlüssig verbunden ist. Die Verbindung von Zahnriemen 21 zum Fördergurt 11 erfolgt analog zu der Verbindung von Kette 18 zum Fördergurt 11.

Die Ketten 18 bzw. die Zahnriemen 21 ragen jeweils in eine in dem Boden 3 vorgesehene Längsnut 23 (siehe **Fig. 4**), wobei zwischen den in die Längsnut 23 hineinragenden Rändern der Ketten 18 bzw. der Zahnriemen 21 und den Rändern der Längsnut 23 jeweils ein Luftspalt s₁ gebildet ist. Dabei sorgen die beiden seitlichen Ränder der Längsnut 23 dafür, dass der Fördergurt 11 nicht nach der Seite weg wandern kann und somit für einen Geradeauslauf des Fördergurtes 11 sorgt. Der Luftspalt s₁ zwischen dem unteren Rand der Ketten 18 bzw. der Zahnriemen 21 und dem unteren Rand der Längsnut 23 verhindert, dass die Ketten 18 bzw. die Zahnriemen 21 mit ihrem unteren Rand in der Längsnut 23 reiben.

Die Umlenkwalze 14, die vorzugsweise frei drehend ausgebildet ist, kann entsprechend der Antriebswalze 15 entweder ebenfalls Zahnräder 19 für die Ketten 18 bzw. Riemenscheiben 22 für die Zahnriemen 21 oder anstelle der Zahnräder 19 bzw. Riemenscheiben 22 Ringnuten 24 (siehe **Fig. 2**) aufweisen, die analog zu den Längsnuten 23 ausgebildet sind.

Zur Reduzierung des Reibwertes zwischen dem Boden 3 und dem oberen Trum 12 des Fördergurtes 11 sind zwischen den Längsnuten 23 bzw. zwischen den Längsnuten 23 und den seitlichen Ladebordwänden 4, 5 Platten 25 auf dem Boden 3 befestigt (siehe **Fig. 4**), die vorzugsweise entweder aus einem Material mit guten Gleiteigenschaften bestehen oder eine Beschichtung aus dem vorgenannten Material aufweisen. Als Material kann hier beispielsweise Polytetrafluorethylen dienen Die Auswahl des vorgenannten Materials sorgt dafür, wie bereits erwähnt, dass der Boden 3 zum einen hoch belastbar ist und zum anderen der Reibwert extrem minimiert wird.

Des Weiteren können die Platten 25 mit einer Vielzahl von Durchgangsbohrungen versehen sein (nicht dargestellt), die mit Druckluft beaufschlagbar sind, wobei mit der Druckluft zusätzlich noch ein Trennmittel eingebracht werden kann. Das Trennmittel kann beispielsweise ein dünnflüssiges Öl, Polytetrafluorethylen, ein Trockenschmierstoff, wie z. B. Graphitpulver, o. dgl. sein. Durch das Trennmittel wird der Reibwert insbesondere beim Anlaufen des Fördergurtes 11 nochmals reduziert.

Anstelle der Durchgangsbohrungen in den Platten 25 können beispielsweise auch Belüftungsleisten vorgesehen sein, die in Nuten der Platten 25 eingesetzt sind und Öffnungen für die Druckluft aufweisen.

Da zumeist das untere Trum von Fördergurten u. dgl. leicht durchhängt, ist unterhalb des unteren Trums 26 des Fördergurtes 11 eine Abstützung 27 für dasselbe angeordnet (siehe **Fig. 1**), die zugleich das untere Trum 26 des Fördergurtes 11 gegen Verschmutzung und Beschädigungen von unten schützt.

Für eine exakte Spannung des Fördergurtes 11 und der Ketten 18 bzw. Zahnriemen 21 sorgt eine Spannvorrichtung (nicht dargestellt) an der Umlenkwalze 14 und/oder sorgen Spannvorrichtungen (ebenfalls nicht dargestellt) an den Zugeinheiten 17.

Zwischen den seitlichen Ladebordwänden 4, 5 und den seitlichen Rändern 28 des Fördergurtes 11 ist jeweils ein weiterer Luftspalt s₂ vorgesehen (siehe **Fig. 4**). Diese Luftspalte s₂ sorgen dafür, dass die seitlichen Ränder 28 des Fördergurtes 11 nicht an den seitlichen Ladebordwänden 4, 5 reiben. Zum Schutz der Luftspalte s₂ bzw. des Bereiches zwischen den seitlichen Ladebordwänden 4, 5 und der seitlichen Ränder 28 des Fördergurtes 11 gegen Eindringen von Schmutz bzw. Schüttgut sind an den seitlichen Ladebordwänden 4, 5 sich über die Länge derselben erstreckende, verkröpft ausgebildete Ableitbleche 29 befestigt, die jeweils an ihrem zu dem Fördergurt 11 gerichteten Ende ein Dichtelement 30 aufweisen. Das Dichtelement 30 stützt sich dabei auf dem Fördergurt 11 ab und dichtet den Laderaum ab.

Ein derartiges Ableitblech 29 mit Dichtelement 30 kann auch an der vorderen Ladebordwand 6 vorgesehen sein, die dabei einen Spalt zwischen dem unteren Ende der vorderen Ladebordwand 6 und dem Fördergurt 11 abdichten (nicht dargestellt).

Um die Reibung an den seitlichen Ladebordwänden 4, 5 bei der Entleerung der Lademulde 2 stetig zu reduzieren, können die seitlichen Ladebordwände 4, 5 von der vorderen Ladebordwand 6 vorzugsweise konisch auseinanderlaufen (nicht dargestellt). Des Weiteren können die seitlichen Ladebordwände 4, 5 und/oder die Ableitbleche 29 ebenfalls mit einer Beschichtung aus einem Material mit guten Gleiteigenschaften, beispielsweise Polytetrafluorethylen versehen sein.

Die erfindungsgemäße Lademulde 2 ist für Lastkraftwagen, Auflieger 1 und Anhänger vorgesehen und soll herkömmliche Kippmulden ersetzen, wobei die zuvor genannten Gefahren der Kippmulden nahezu ausgeschlossen sind. Am hinteren Ende des Lastkraftwagens oder des Aufliegers 1 oder des Anhängers oder der Lademulde 2 ist vorzugsweise ein Abstreifer 31 für das Schüttgut beim Entladen angeordnet. Alternativ zu dem festen Abstreifer 31 kann ein am hinteren Ende 7 der Lademulde 2 oder des Lastkraftwagens, Aufliegers 1 und/oder Anhängers vorgesehener Stoßfänger den Abstreifer 31 bilden, der in vertikaler Richtung verfahrbar ausgebildet sein kann (siehe **Fig. 5**) und dabei aus einer Grundposition in eine Abstreifposition und zurück bewegbar ist.

Nachfolgend wird noch kurz das Verfahren zur Entleerung der Lademulde 2 beschrieben:
Bei einem mittels einem Bagger o. dgl. mit Schüttgut beladenem Lastkraftwagen, Auflieger 1 oder Anhänger mit der erfindungsmäßigen Lademulde 2 wird beim Entleeren das sich in der Lademulde 2 befindliche Schüttgut über einen sich auf dem Boden 3 der Lademulde 2 abstützenden und sich vom vorderen Ende 13 der Lademulde 2 zu der am hinteren Ende 7 der Lademulde 2 schwenkbar gelagerten Rückwandklappe 8 erstreckenden und umlaufenden Fördergurt 11 horizontal vom vorderen Ende 13 der Lademulde 2 zum hinteren Ende 7 der Lademulde 2 gefördert, wobei das Schüttgut über das hintere Ende 7 der Lademulde 2 bzw. die hintere Öffnung bei geöffneter Rückwandklappe 8 aus der Lademulde 2 abgeworfen wird.

Die Lademulde 2 ist aber auch dazu geeignet, dieselbe mit Stückgut zu beladen. Dazu wird das Stückgut auf das hintere Ende 7 der Lademulde 2 aufgestellt und der Fördergurt 11 in entgegengesetzter Richtung angetrieben. Das Stückgut wird so nach und nach in Richtung der vorderen Ladebordwand 6 gefördert bis die Lademulde 2 ganz beladen ist.

## Patentansprüche

1. Lademulde (2) für Lastkraftwagen, Auflieger (1) und/oder Anhänger zum Transport von Schüttgut, wie z. B. Asphalt, Erde, Steine, Schotter, Kies, Sand, Schutt o. dgl., wobei die Lademulde (2) im Wesentlichen aus einem Boden (3), zwei seitlichen Ladebordwänden (4, 5), einer vorderen Ladebordwand (6) und einer am hinteren Ende (7) der Lademulde (2) schwenkbar gelagerten Rückwandklappe (8) gebildet ist,
**dadurch gekennzeichnet,**
**dass** der Boden (3) einen sich mindestens über die Länge und Breite der Lademulde (2) erstreckenden Fördergurt (11) aufweist, der zwischen zwei Umlenkelementen (9, 10) eingespannt ist und dessen zu dem Schüttgut gerichtete obere Trum (12) sich auf dem Boden (3) abstützt, wobei das vorzugsweise im Bereich des vorderen Endes (13) der Lademulde (2) bzw. der vorderen Ladebordwand (6) angeordnete Umlenkelement (9) als sich mindestens über die Breite des Fördergurtes (11) erstreckende Umlenkwalze (14) und das vorzugsweise im Bereich des hinteren Ende (7) der Lademulde (2) bzw. der Rückwandklappe (8) angeordnete Umlenkelement (10) als sich mindestens über die Breite des Fördergurtes (11) erstreckende Antriebswalze (15) ausgebildet ist, wobei die Antriebswalze (15) formschlüssig an dem Fördergurt (11) angreift.

2. Lademulde nach Anspruch 1,
**dadurch gekennzeichnet,**
**dass** die Antriebswalze (15) über eine Zugeinrichtung (16) mit dem Fördergurt (11) verbunden ist, wobei die Zugeinrichtung (16) aus einer Mehrzahl von in Längsrichtung der Lademulde (2) verlaufenden, gleichmäßig über die Breite der Lademulde (2) verteilten Zugeinheiten (17) gebildet ist.

3. Lademulde nach Anspruch 1 oder 2,
**dadurch gekennzeichnet,**
**dass** jede Zugeinheit (17) aus einer am Innenumfang des Fördergurtes (11) anliegenden Kette (18) gebildet ist, die einerseits mit dem Fördergurt (11) vorzugsweise lösbar verbindbar und andererseits mit einem Zahnrad (19) der Antriebswalze (15) formschlüssig verbunden ist, oder aus einem am Innenumfang des Fördergurtes (11) anliegenden Zahnriemen (21) gebildet ist, der einerseits mit dem Fördergurt (11) vorzugsweise lösbar verbindbar und andererseits mit einer gezahnten Riemenscheibe (22) der Antriebswalze (15) formschlüssig verbunden ist.

4. Lademulde nach Anspruch 3,
**dadurch gekennzeichnet,**
**dass** jede Kette (18) bzw. jeder Zahnriemen (21) mittels einer Vielzahl von Schrauben (20) oder mittels einer Vielzahl von Nieten oder mittels eines Klebstoffes mit dem Fördergurt (11) verbunden ist.

5. Lademulde nach einem der Ansprüche 1 bis 4,
**dadurch gekennzeichnet,**
**dass** die Umlenkwalze (14) entsprechend der Antriebswalze (15) Zahnräder (19) für die Ketten (18) bzw. gezahnte Riemenscheiben (22) für die Zahnriemen (21) aufweist.

6. Lademulde nach einem der Ansprüche 1 bis 5,
**dadurch gekennzeichnet,**
**dass** die Ketten (18) bzw. die Zahnriemen (21) jeweils in eine U-förmig ausgebildete Längsnut (23) im Boden hineinragen, wobei zwischen den in die Längsnut (23) ragenden Rändern der Ketten (18) bzw. der Zahnriemen (21) und den Rändern der Längsnut (23) ein Luftspalt (s₁) gebildet ist.

7. Lademulde nach einem der Ansprüche 1 bis 6,
**dadurch gekennzeichnet,**
**dass** zur Verminderung des Reibwertes zwischen dem Boden (3) und dem oberen Trum (12) des Fördergurtes (11) zwischen den Längsnuten (23) bzw. zwischen den Längsnuten (23) und den seitlichen Ladebordwänden (4, 5) Platten (25) auf dem Boden (3) befestigt sind.

8. Lademulde nach Anspruch 7,
**dadurch gekennzeichnet,**
**dass** die Platten (25) eine Beschichtung aus einem Material mit guten Gleiteigenschaften aufweisen oder dass die Platten (25) aus einem Material mit guten Gleiteigenschaften bestehen.

9. Lademulde nach einem der Ansprüche 1 bis 8,
**dadurch gekennzeichnet,**
**dass** die Platten (25) eine Vielzahl von Durchgangsbohrungen aufweisen, die mit Druckluft beaufschlagbar sind.

10. Lademulde nach einem der Ansprüche 1 bis 9,
**dadurch gekennzeichnet,**
**dass** der Umlenkwalze (14) und/oder jeder Zugeinheit (17) eine Spannvorrichtung zugeordnet ist.

11. Lademulde nach einem der Ansprüche 1 bis 10,
**dadurch gekennzeichnet,**
**dass** unterhalb des unteren Trums (26) des Fördergurtes (11) eine Abstützung (27) für denselben vorgesehen ist.

12. Lademulde nach einem der Ansprüche 1 bis 11,
**dadurch gekennzeichnet,**
**dass** die Antriebswalze (15) hydraulisch oder elektrisch angetrieben ist.

13. Lademulde nach einem der Ansprüche 1 bis 12,
**dadurch gekennzeichnet,**
**dass** an den beiden seitlichen Ladebordwänden (4, 5) und/oder der vorderen Ladebordwand (6) sich über die Länge derselben erstreckende, verkröpft ausgebildete Ableitbleche (29) befestigt sind, an deren zu dem Fördergurt (11) gerichteten Ende ein Dichtelement (30) angeordnet ist, das sich auf dem Fördergurt (11) abstützt und den Laderaum abdichtet.

14. Lademulde nach einem der Ansprüche 1 bis 13,
**dadurch gekennzeichnet,**
**dass** mindestens die seitlichen Ladebordwände (4, 5) und/oder die Ableitbleche (29) eine Beschichtung aus einem Material mit guten Gleiteigenschaften aufweisen.

15. Lastkraftwagen, Auflieger (1) und/oder Anhänger mit einer Lademulde (2) nach einem der vorangegangenen Ansprüche.
